# EUROPEAN PATENT APPLICATION

(11) **EP 0 687 907 A1**
(43) Date of publication of application: **20.12.1995**
(21) Application number: 95300080.9
(22) Date of filing: 06.01.1995
(51) Int. Cl.: G01N 27/90

(54) **Micro Eddy current sensor**

(30) Priority: 13.06.1994 JP 130478/94
(71) Applicant: TOKYO GAS CO., LTD., Minato-ku Tokyo 105 (JP)
(72) Inventor: Hamasaki, Yukio, Tokyo (JP)
(74) Representative: Jones, Stephen Anthony

(57) **Abstract**

A sensor has a coil formed on a silicon substrate through an insulating film by a micromachining technique, wherein the coil is formed by electrodeposition of a metal with a low resistivity, and its aspect ratio (h/d) as a ratio of a line thickness (h) to a line width (d) is at least one. The coil has a multilayered structure in the vertical direction and/or a core formed almost at the central position of the coil, thereby increasing an inductance.

## Description

### BACKGROUND OF THE INVENTION

### 1. FIELD OF THE INVENTION

The present invention relates to a magnetic sensor and, more particularly, to a micro eddy current sensor for metal inspection, which is formed on a silicon substrate by micromachining.

### 2. DESCRIPTION OF THE PRIOR ART

As a sensor for detecting a defect such as a flaw in a metal plate or pipe in non-destructive inspection, an eddy current sensor using the principle of magnetic induction is known well. More specifically, a coil through which an AC current flows is moved close to an object under test, and a change in impedance of the coil, which is caused by an eddy current (or magnetization in a ferromagnetic substance) in the object under test, is detected.

The eddy current generated in a conductive material or impedance of the coil changes depending on a defect in the object under test, the conductivity, permeability, size, and shape of the object under test, or a distance between the coil and the object under test. For this reason, when the conductivity, permeability, size, or shape of the object under test is checked in advance, and at the same time, the distance between the coil and the object under test is kept unchanged, the presence/absence of a defect in the object under test is detected by a change in eddy current or impedance. The degree of the defect can be determined in accordance with the degree of change in eddy current or impedance.

A gas conduit (to be simply referred to as a gas pipe hereinafter) buried underground will be exemplified as an object under test. As for a large-diameter pipe (50 mm or more) such as a trunk gas pipe, detection is conventionally performed using a robot capable of traveling in the pipe (pipe robot). However, for a small-diameter pipe (25 mm or less) such as a branch pipe as a domestic gas pipe branching from the trunk gas pipe, a smaller inspection instrument (sensor) is required.

In recent years, attempts have been made to use silicon not only as a semiconductor element material but also as a sensor material. This is because the characteristics of silicon which is excellent in reliability and mass productivity and can achieve cost reduction and high performance in integration with an IC have received a great deal of attention.

A magnetic inspection sensor using such characteristics of silicon is disclosed in Japanese Unexamined Utility Model Publication No. 62-140448 in which a search coil, consisting of aluminum, for detecting a magnetic field (magnetic flux) is formed on a silicon substrate by adopting the semiconductor manufacturing technique.

This magnetic inspection sensor detects a leakage magnetic field (magnetic flux) of a magnetized object under test, and its operation principle is substantially different from that of an eddy current sensor of the present invention, as a matter of course. Additionally, a large-scaled magnetomotive coil is required to magnetize the object under test during inspection. Therefore, this sensor cannot be used as a sensor for inspecting the interior of a small-diameter pipe buried underground. However, this sensor has a very small coil formed on a silicon substrate by using the semiconductor manufacturing technique. Because of this similarity, this sensor is examined as a prior art.

The sensor disclosed in Japanese Unexamined Utility Model Publication No. 62-140448 uses, as a coil, a thin aluminum film deposited on a silicon wafer (silicon substrate) through an insulating film and having a line width of 7 µm and a thickness of 2 µm. In this case, the resistance is as high as 1 KΩ or more, and the Q value (inductance/resistance) becomes low. In addition, the inductance of the coil itself is low because of the absence of a core. Since these problems remain unsolved, no micro eddy current sensor with a high sensitivity is provided yet.

### SUMMARY OF THE INVENTION

The present invention has been made to solve the above problems in the prior art, and has as its object to provide a very small micro eddy current sensor with a high sensitivity, which has a coil with a high Q value and allows mass production at low manufacturing cost.

In order to achieve the above object, according to the first aspect of the present invention, there is provided a micro eddy current sensor comprising coil means formed on a silicon substrate through an insulating film by micromachining, the coil means having a coil whose aspect ratio (h/d) as a ratio of a line thickness (h) to a line width (d) is at least one.

According to the second aspect of the present invention, there is provided a micro eddy current sensor having a core consisting of a material with a high permeability and formed at a central position of the coil according to the first aspect.

According to the third aspect of the present invention, there is provided a micro eddy current sensor wherein the coil according to the first and second aspects is formed by electrodeposition using copper as a material.

According to the fourth aspect of the present invention, there is provided a micro eddy current sensor wherein the coil according to the first to third aspects is formed to have a multilayered structure with at least two layers in a vertical direction.

According to the present invention, a resist layer having a large thickness (10 µm or more) is formed on a silicon substrate through an insulating film by micromachining. A spiral groove having a small width (10 µm or less) is two-dimensionally formed in the resist layer by patterning. Thereafter, a metal with a low resistivity, e.g., copper is buried in the groove by electrodeposition, thereby forming a very small coil having an aspect ratio of one or more, a low resistivity, and a high Q value. With these processes, a micro eddy current sensor with a high sensitivity, which can detect a small change in magnetic field, can be mass-produced at a low manufacturing cost.

The above and other advantages, features and additional objects of the present invention will become manifest to those versed in the art upon making reference to the following detailed description and accompanying drawings in which preferred embodiments incorporating the principle of the present invention are shown by way of illustrative example.

### BRIEF DESCRIPTION OF THE DRAWINGS

Fig. 1 is a sectional view schematically showing the first embodiment of the present invention;
Fig. 2 is a plan view showing the two-dimensional structure of a coil of the first embodiment of the present invention;
Figs. 3A to 3F are process charts showing manufacturing processes by micromachining of the first embodiment of the present invention;
Fig. 4 is a sectional view schematically showing the second embodiment of the present invention;
Fig. 5 is a plan view showing the two-dimensional structure of a coil of the second embodiment of the present invention;
Figs. 6A to 6I are process charts showing manufacturing processes by micromachining of the second embodiment of the present invention;
Fig. 7 is a sectional view schematically showing the third embodiment of the present invention;
Fig. 8 is a plan view showing the two-dimensional structure of a coil of the third embodiment of the present invention;
Figs. 9A to 9P are process charts showing manufacturing processes by micromachining of the third embodiment of the present invention;
Fig. 10 is a sectional view schematically showing the fourth embodiment of the present invention;
Fig. 11 is a plan view showing the two-dimensional structure of a coil of the fourth embodiment of the present invention; and
Figs. 12A to 12S are process charts showing manufacturing processes by micromachining of the fourth embodiment of the present invention.

### DETAILED DESCRIPTION OF THE PREFERRED EMBODIMENTS

The present invention will be described in more detail in conjunction with some preferred embodiments shown in the accompanying drawings.

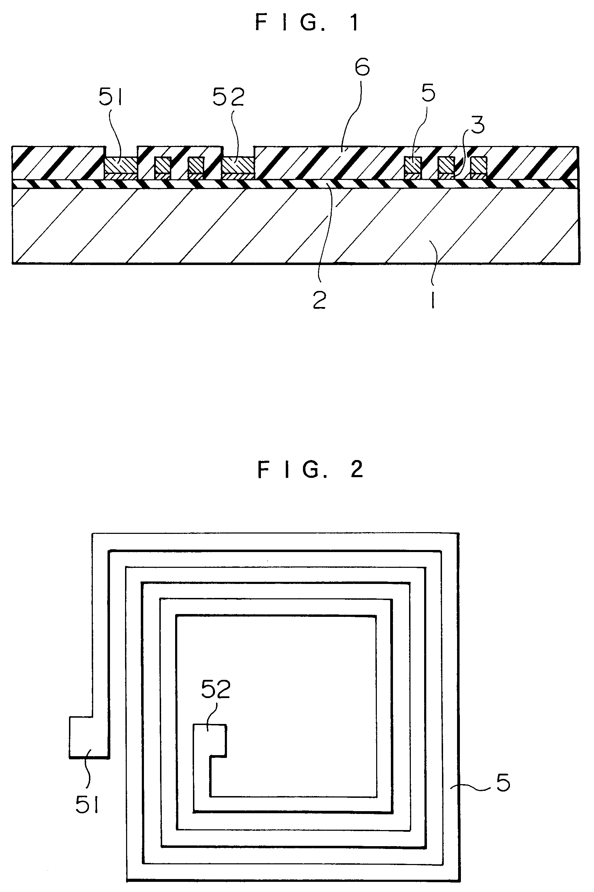

Fig. 1 is a longitudinal sectional view showing the first embodiment as the basic structure of a micro eddy current sensor of the present invention. As is apparent from Fig. 1, in this embodiment, a coil 5 of a single layer is formed on a silicon substrate 1 through an insulating film 2, and a protective film 6 is formed on the resultant structure. An underlying metal film 3 is used in electrodeposition of a thin film serving as a coil and consisting of a metal with a low resistivity on the silicon substrate 1. Terminals 51 and 52 are used to connect the coil 5 to external power supply and processing circuits (not shown).

Fig. 2 is a plan view showing the spiral coil 5 of the single layer formed on the silicon substrate 1 in the first embodiment. Note that the spiral shape is not limited to a rectangular shape as shown in Fig. 2.

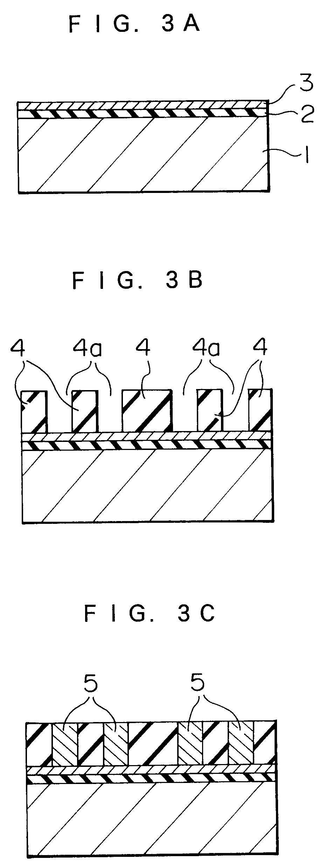

Figs. 3A to 3F are sectional views showing the charts of manufacturing processes by micromachining of the first embodiment. In Fig. 3A, the insulating film 2 consisting of, e.g., SiO₂ and having a thickness of about 5,000 Å is formed on the surface of the silicon substrate 1. To form the underlying metal film 3 for electrodeposition of a metal serving as a coil and having a low resistivity, a metal such as Au with a high conductivity is formed on the insulating film 2 to a thickness of about 5,000 Å using a sputtering or deposition apparatus.

In the above processes, as the insulating film 2, SiN or polyimide can be used in addition to SiO₂. As the underlying metal film 3, a metal such as Cr, Pt, or Cu can be used in addition to Au.

As shown in Fig. 3B, a resist 4 serving as a pattern for electrodeposition of the coil 5 is coated to a thickness of 10 µm or more. Thereafter, the resist 4 is patterned and removed at a portion corresponding to the coil 5 to be electrically deposited. A recessed portion 4a with a depth of 10 µm or more and two-dimensionally having a spiral shape is formed while the surface of the underlying metal film 3 is exposed to the bottom surface of the recessed portion 4a.

As the resist 4, any material allowing formation of a film having a large thickness of 10 µm or more and having high pattern resolution and good release characteristics after electrodeposition can be used. For example, AZ4903 (posiresist) available from Hoechst can be used.

After formation of the pattern for electrodeposition of the coil, as shown in Fig. 3C, the coil 5 is electrically deposited in the recessed portion 4a so as to reach the thickness of the resist 4. As a metal to be electrodeposited, a metal with a low resistivity, e.g., Cu, Au, Ni, or Pt is preferably used. Particularly, Cu is most preferably used because of its cost and electrodeposition characteristics.

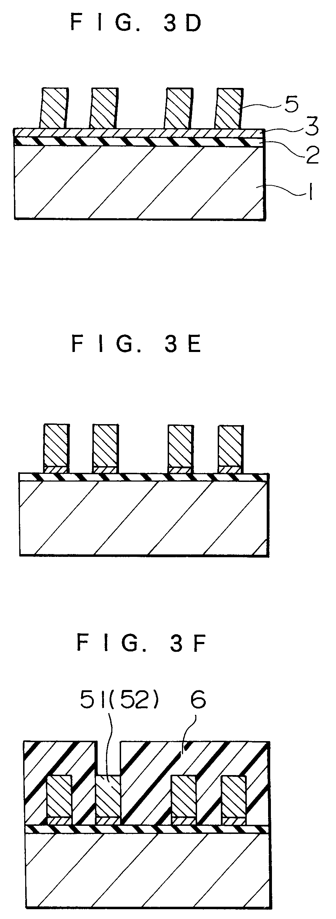

As shown in Fig. 3D, the resist 4 used as a pattern for electrodeposition of the coil is released.

In a process shown in Fig. 3E, sputter etching of the underlying metal film 3 as an underlayer for electrodeposition of the coil 5 is performed on the entire surface of the silicon substrate 1. This sputter etching is continued until the underlying metal film 3 on the surface of the insulating film 2 is removed. At this time, the metal film electrodeposited as the coil 5 is also etched, though the etching amount can be ignored because the metal film has a thickness much larger than that of the underlying metal film 3. In the sputter etching, an inert gas such as argon and nitrogen is used.

As shown in Fig. 3F, the protective film 6 consisting of a resist or polyimide and having a thickness of about 20 µm is formed to protect the coil 5. As the protective film 6, any material satisfying the following conditions can be used; ① a film having a thickness of 10 µm or more can be formed, ② chemical stability is ensured, ③ thermal stability is ensured, and ④ excellent electrical characteristics as an insulating film are obtained. For example, Photoneece 5100FX available from Toray Industries can be used.

The protective film 6 is etched and removed at a portion corresponding to the terminal 51 (52) of the coil 5.

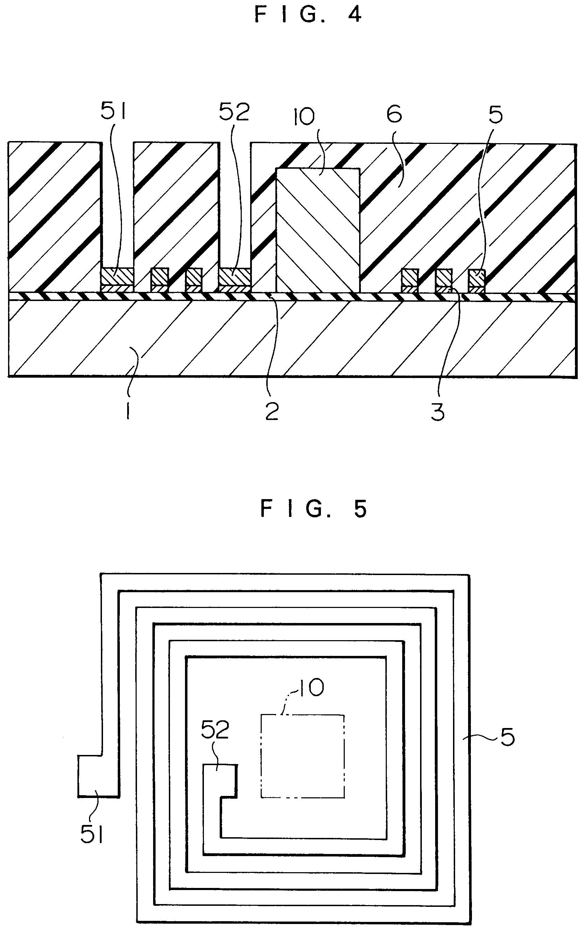

The second embodiment of the present invention will be described below with reference to Figs. 4 to 6I.

As is apparent from Fig. 4, the second embodiment is different from the first embodiment only in that a core 10 is formed at the central position of a coil 5, and a detailed description of each portion except for the core 10 will be omitted. With the arrangement of the core 10, the self-inductance of the coil 5 increases. If coils consisting of metals with the same resistivity are compared with each other, a coil with the core has a higher Q value and sensitivity as a sensor.

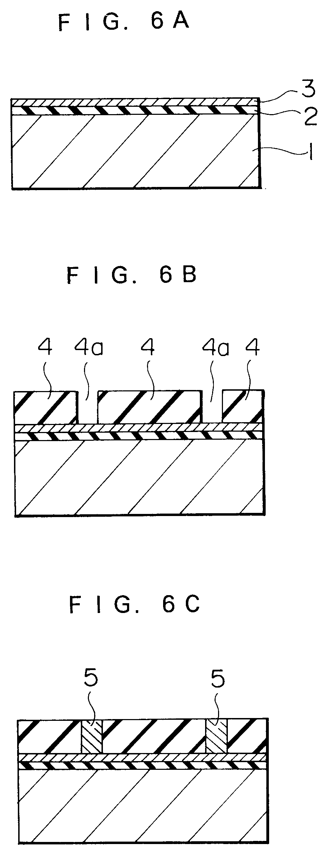

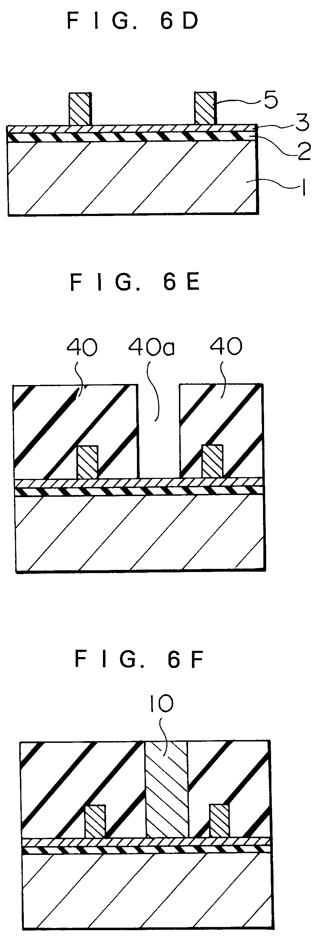

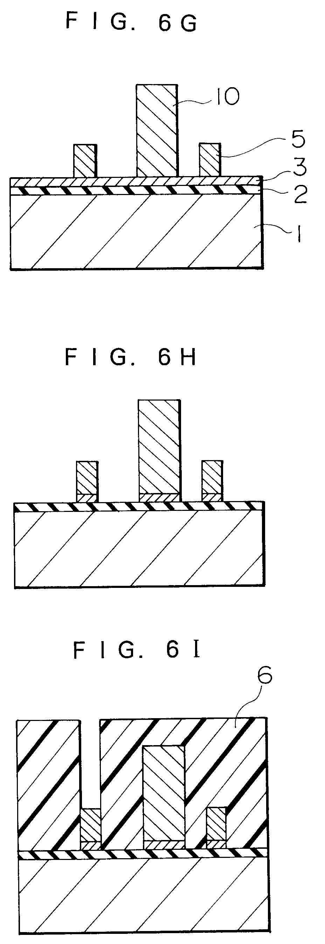

Figs. 6A to 6I are sectional views showing the charts of manufacturing processes by micromachining of the second embodiment. Processes in Figs. 6A to 6D are the same as those in Figs. 3A to 3D. Processes in Figs. 6G to 6I are the same as those in Figs. 3D to 3F. Therefore, a detailed description thereof will be omitted, and only processes of forming the core 10 will be described below with reference to Figs. 6E and 6F.

In Fig. 6E, a resist film 40 serving as a pattern for electrodeposition of the core and having a thickness of 20 µm or more is formed by coating on a silicon substrate 1 having the coil 5 thereon. Since the thickness normally reaches about 10 µm in one coating operation, coating is performed twice in this case. The same resist material as that of the resist film 4 of the first embodiment is used for the resist film 40. After soft-baking of the resist film 40, the resist film 40 etched to form a recessed portion corresponding to the central position of the coil 5 two-dimensionally having a spiral shape, thereby forming a recessed portion 40a for electrodeposition of the core 10 having a width of 10 µm or more and a depth reaching to the surface of an underlying metal film 3.

As shown in Fig. 6F, electrodeposition of the core 10 is performed. As a metal material to be electrodeposited, FeNi (Permalloy) is preferably used. However, any material with a high permeability can be used. Electrodeposition of the core 10 is continued until the level of the core 10 reaches the surface of the resist film 40.

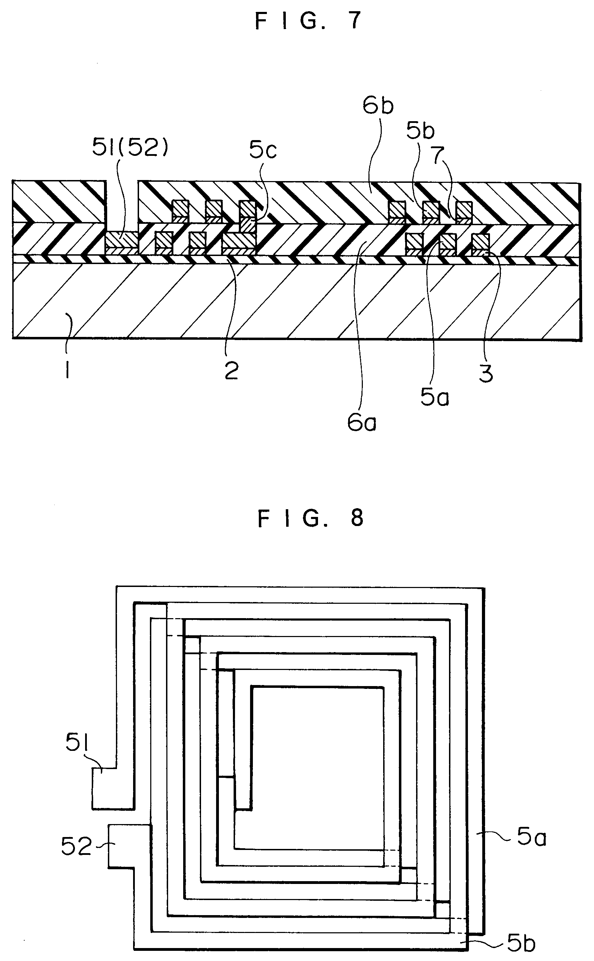

As the third embodiment of the present invention, a micro eddy current sensor having coils 5a and 5b having a two-layered structure will be described below with reference to Figs. 7 to 9P.

Fig. 7 is a sectional view showing the third embodiment. Fig. 8 is a plan view showing the coils 5a and 5b having a two-layered structure in the third embodiment. As is apparent from Figs. 7 and 8, the two coils 5a and 5b are connected to each other by a common contact 5c. As in the third embodiment, to increase the sensitivity without changing the two-dimensional size (about 3 mm x 3 mm) of the sensor, coils having a multilayered structure in the vertical direction must be formed to increase the self-inductance of the coil.

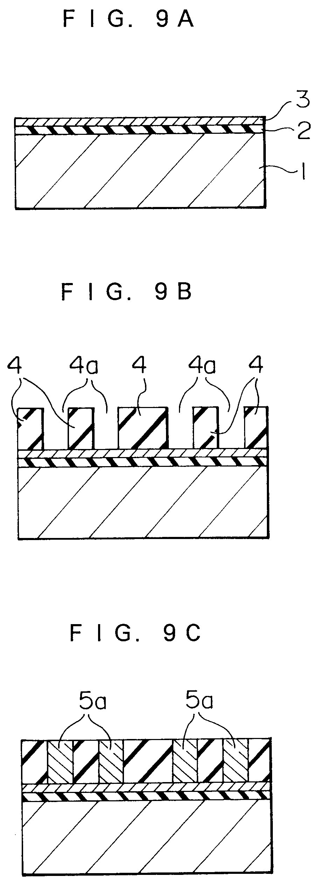

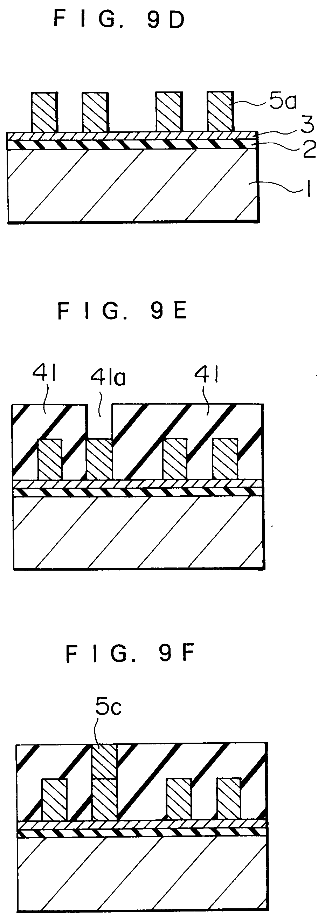

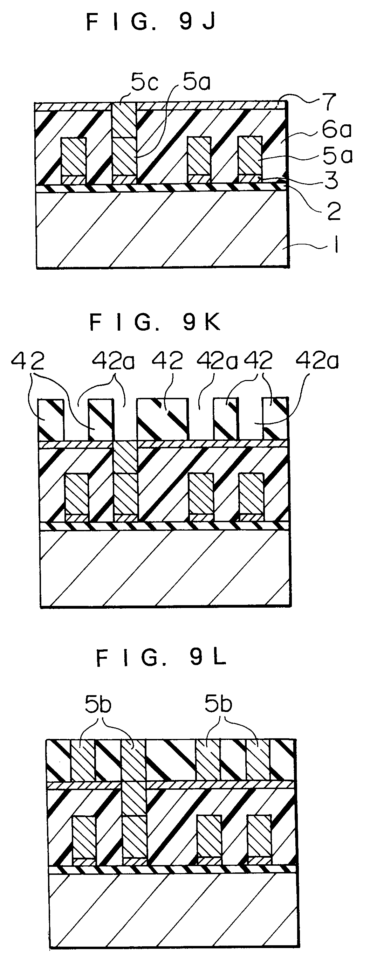

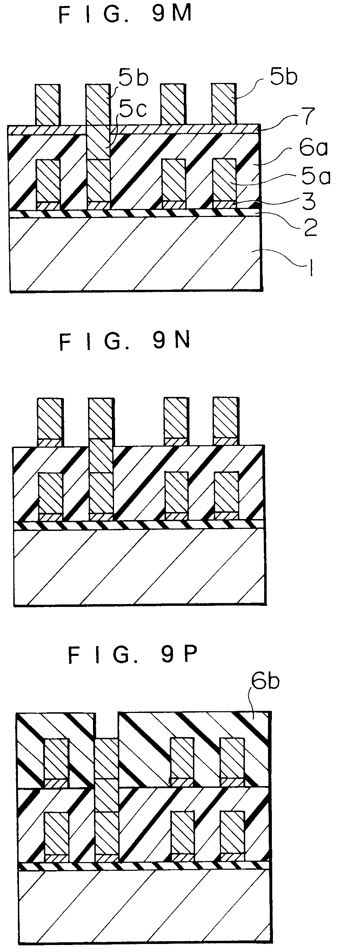

To manufacture the micro eddy current sensor having the coils of a two-layered structure, simple repetition of the manufacturing processes of the first embodiment is not sufficient, and manufacturing processes shown in Figs. 9A to 9P must be performed. Processes in Figs. 9A to 9D are the same as those in Figs. 3A to 3D in the series of manufacturing processes of the first embodiment, and a detailed description thereof will be omitted. A process in Fig. 9E will be described first.

In the process shown in Fig. 9E, a resist film 41 serving as a pattern for electrodeposition of the contact 5c between the coil 5a of the first layer (lower layer) and the coil 5b of the second layer (upper layer) is formed by coating to a thickness of 15 to 20 µm. After hardening of the resist film 41, the resist film 41 is patterned at a portion corresponding to one end of the coil 5a of the first layer, thereby forming a recessed portion 41a to which the surface of one end of the coil 5a of the first layer is exposed.

In a process shown in Fig. 9F, the contact 5c is formed in the recessed portion 41a of the resist film 41 by electrodeposition of copper.

In Fig. 9G, the resist film 41 serving as a pattern for electrodeposition of the contact 5c is removed.

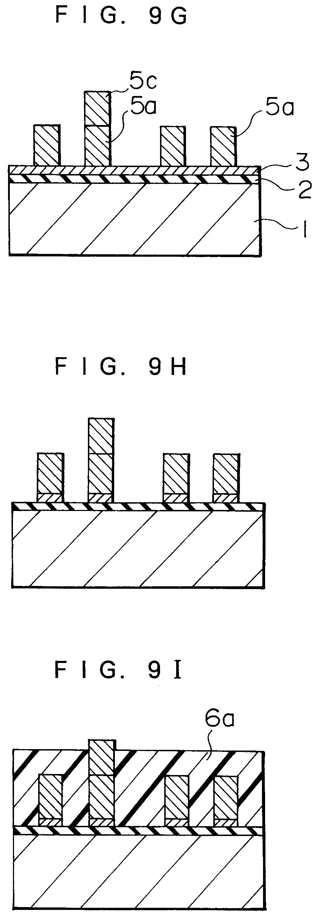

As shown in Fig. 9H, sputter etching of an underlying metal film 3 serving as an underlayer for electrodeposition of the coil 5a of the first layer is performed on the entire surface of a silicon substrate 1. The sputter etching is continued until the underlying metal film 3 on the surface of an insulating film 2 is removed. At this time, the metal film electrodeposited as the coil 5a of the first layer is also etched, through the etching amount can be ignored because the metal layer has a thickness much larger than that of the underlying metal film 3. In the sputter etching, an inert gas such as argon and nitrogen is used.

As shown in Fig. 9I, an insulating interlayer 6a having a thickness of about 20 µm is formed to fill a space between the coil 5a of the first layer and the coil 5b of the second layer to be formed on the coil 5a. As the insulating interlayer 6a, any material satisfying the following conditions can be used; ① a film having a thickness of 10 µm or more can be formed, ② chemical stability is ensured, ③ thermal stability is ensured, and ④ excellent electrical characteristics as an insulating film are obtained. As a polyimide, Photoneece 5100FX available from Toray Industries can be used.

As shown in Fig. 9J, a second underlying metal film 7 having a thickness of about 5,000 Å is formed using a sputtering or deposition apparatus to electrically deposit the coil 5b of the second layer (upper layer). At this time, the surface of the second underlying metal film 7 preferably has the same level as that of the surface of the contact 5c. The same metal as for the first underlying metal film 3 is used for the second underlying metal film 7.

After formation of the second underlying metal film 7, as shown in Fig. 9K, a resist film 42 serving as a pattern for electrodeposition of the coil 5b of the second layer is formed on the second underlying metal film 7 by coating to a thickness of 10 µm or more. As in the process of Fig. 3B, the resist film 42 is patterned at a portion corresponding to the coil 5b of the second layer to be electrically deposited. A recessed portion 42a with a depth of 10 µm or more and two-dimensionally having a spiral shape is formed while the surface of the second underlying metal film 7 is exposed to the bottom surface of the recessed portion 42a. The resist 42 used at this time is the same as the resist 41.

After formation of the pattern for electrodeposition of the coil 5b of the second layer, as shown in Fig. 9L, the coil 5b of the second layer is electrodeposited so as to reach the thickness of the resist 42. As a metal to be electrodeposited, the same material as that of the coil 5a of the first layer is used.

Upon completion of electrodeposition of the coil 5b of the second layer, as shown in Fig. 9M, the resist 42 is removed.

A process shown in Fig. 9N is the same as that in Fig. 9H. Sputter etching of the second underlying metal film 7 serving as an underlayer for electrodeposition of the coil 5b of the second layer is performed to remove the second underlying metal film 7 from the entire surface of the silicon substrate 1. At this time, the metal film electrodeposited as the coil 5b of the second layer is also etched, though the etching amount can be ignored because the metal film has a thickness much larger than that of the second underlying metal film 7. In the sputter etching, an inert gas such as argon and nitrogen is used.

Upon completion of sputter etching, as shown in Fig. 9P, a protective film 6b having a thickness of about 20 µm is formed to protect the coil 5b of the second layer. As the protective film 6b, a resist or polyimide can be used.

Thereafter, the insulating interlayer 6a (protective film 6b) is etched and removed from a portion corresponding to a terminal 51 (52) of the coil 5a (5b). External power supply and processing circuits (not shown) are connected to the coils 5a and 5b through these terminals.

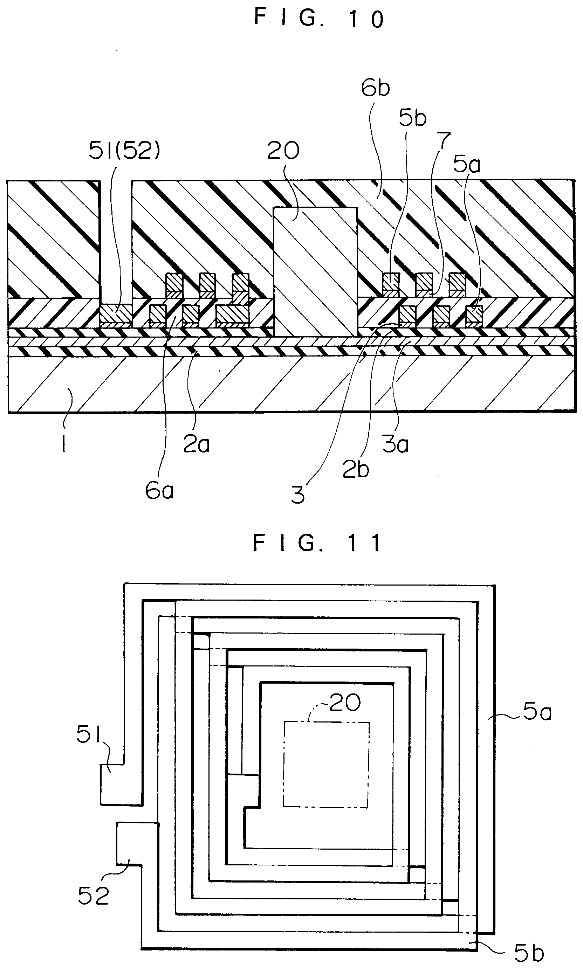

As the fourth embodiment of the present invention, a micro eddy current sensor having not only a two-layered coil structure but also a core and its manufacturing processes will be described below with reference to Figs. 10 to 12S.

As is apparent from a sectional view of the entire structure shown in Fig. 10 and a plan view of a coil shown in Fig. 11, the fourth embodiment is different from the third embodiment only in that a core 20 is formed at the central position of coils 5a and 5b having a two-layered structure, and a detailed description of each portion except for the core 20 will be omitted. With the arrangement of the core 20, the self-inductance of the coil further increases as compared to that of the third embodiment.

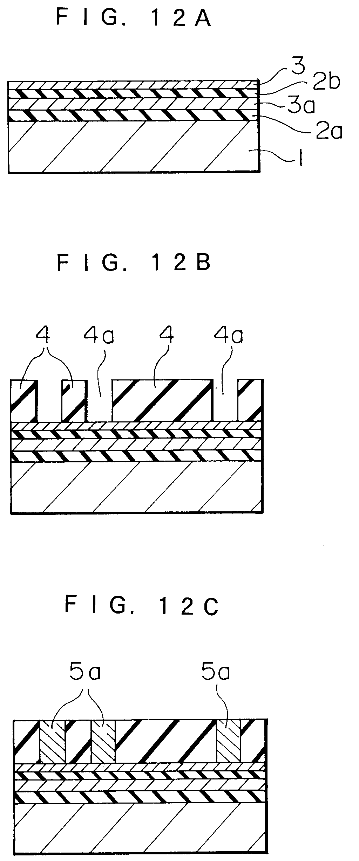

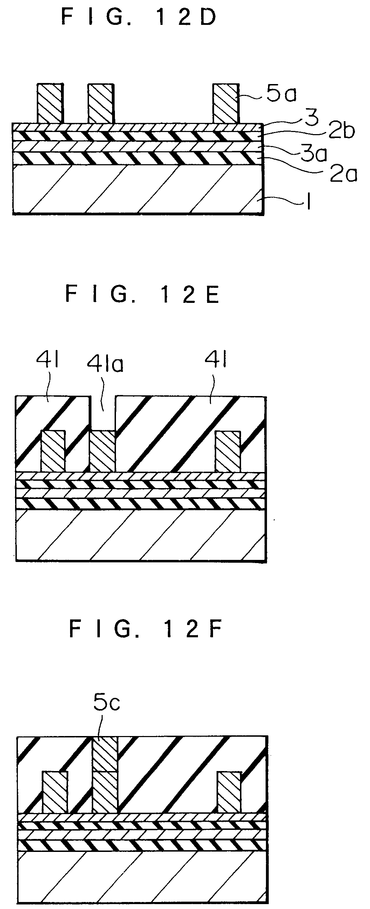

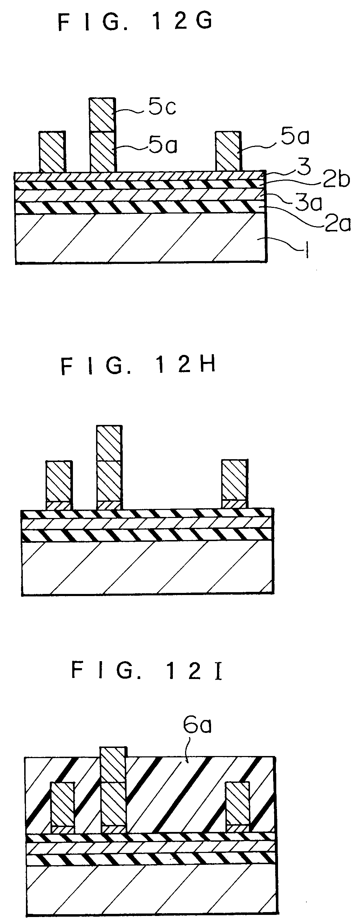

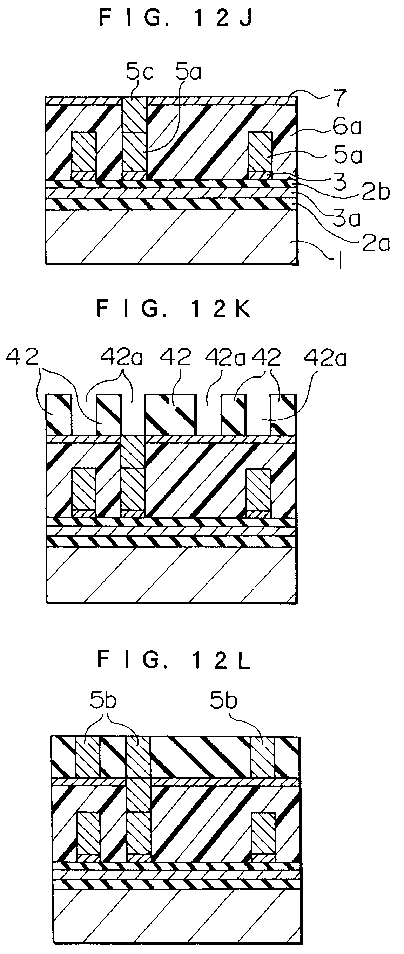

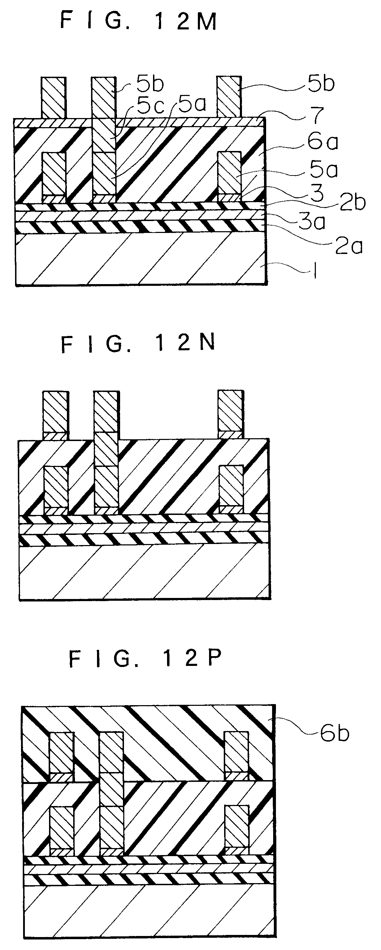

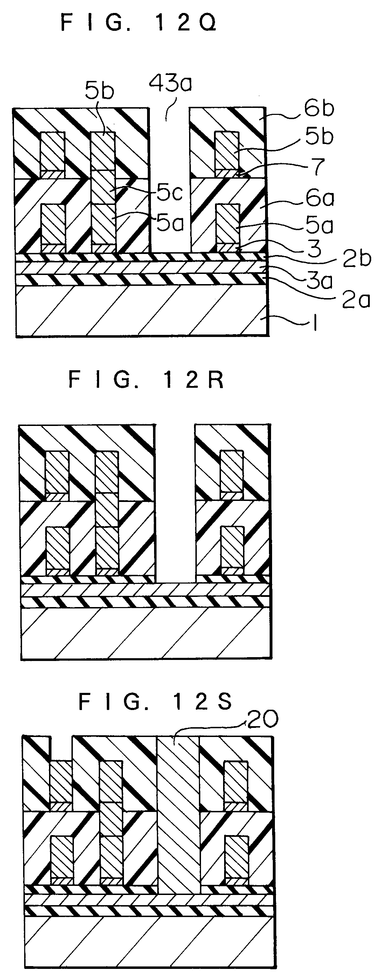

The manufacturing processes of the fourth embodiment will be described in accordance with process charts as sectional views in Figs. 12A to 12S. Processes in Figs. 12B to 12P are the same as those in Figs. 9B to 9P in the series of manufacturing processes of the third embodiment, and a detailed description thereof will be omitted. Processes in Fig. 12A and 12Q to 12S will be described below.

In a process shown in Fig. 12A, an underlying metal film 3a for electrodeposition of the core and an underlying metal film 3 for electrodeposition of the coil of the first layer, both of which have a thickness of about 5,000 Å, are formed on a silicon substrate 1 through a first insulating film 2a consisting of SiO₂ and a second insulating film 2b consisting of SiN, respectively.

Thereafter, the coils 5a and 5b of the upper and lower layers are formed in the processes of Figs. 12A to 12P. The processes are the same as those of the third embodiment, and a detailed description thereof will be omitted. The processes of forming the core 20 will be described below with reference to Figs. 12Q to 12S.

As shown in Fig. 12Q, to form a recessed pattern for electrodeposition of the core, a protective film 6b for the coil 5b of the second layer and an insulating interlayer 6a are etched by dry etching such as RIE, thereby forming a recessed portion 43a reaching the surface of the second insulating film 2b. As a gas source for dry etching at this time, O₂ or CF₄ is used.

The second insulating film 2b is etched and removed to expose the surface of the underlying metal film 3a for electrodeposition of the core, thereby completing the recessed portion 43a for electrodeposition of the core (Fig. 12R).

As shown in Fig. 12S, the core 20 consisting of a magnetic material such as FeNi having a high permeability is electrically deposited until the core reaches the level of the surface of the protective film 6b.

Thereafter, dry etching of appropriate portions of the protective film 6b and the insulating interlayer 6a is performed by RIE or the like to expose the output terminals of the coils 5a and 5b.

Although manufacturing of a single sensor is shown in the embodiments, a plurality of sensors are simultaneously manufactured on a single silicon substrate and then separated from each other, as a matter of course.

The above description has been made only for preferred embodiments of the present invention, and the present invention is not limited to the above embodiments.

## Claims

1. A micro eddy current sensor comprising coil means formed on a silicon substrate through an insulating film by micromachining, said coil means having a coil whose aspect ratio (h/d) as a ratio of a line thickness (h) to a line width (d) is at least one.

2. A sensor according to claim 1, wherein said coil means includes a core consisting of a material with a high permeability and formed at a central position of said coil.

3. A sensor according to claim 1, wherein said coil is formed by electrodeposition using copper as a material.

4. A sensor according to claim 2, wherein said coil is formed by electrodeposition using copper as a material.

5. A sensor according to claim 1, wherein said coil is formed to have a multilayered structure with at least two layers in a vertical direction.

6. A sensor according to claim 2, wherein said coil is formed to have a multilayered structure with at least two layers in a vertical direction.

7. A sensor according to claim 3, wherein said coil is formed to have a multilayered structure with at least two layers in a vertical direction.
